# EUROPÄISCHE PATENTSCHRIFT

(11) **EP 1 296 123 B1**
(45) Veröffentlichungstag und Bekanntmachung des Hinweises auf die Patenterteilung: **29.06.2005**
(21) Anmeldenummer: 01122794.9
(22) Anmeldetag: 21.09.2001
(51) Int. Cl.: G01L 19/00

(54) **Messgeräteinstallation an einer Prozessleitung einer Prozessanlage**
Transmitter installation in a process line of a process plant
Installation transmetteur montée sur un conduit d'une installation de traitement

(43) Veröffentlichungstag der Anmeldung: 26.03.2003
(73) Patentinhaber: Hess, Martin, 85051 Ingolstadt (DE)
(72) Erfinder: Hess, Martin, 85051 Ingolstadt (DE)
(74) Vertreter: Liebl, Thomas, Dipl.-Ing.

(56) Entgegenhaltungen:
- DE-C- 19 921 172
- US-A- 5 069 072
- US-A- 5 502 659

## Beschreibung

Die Erfindung betrifft eine Messgeräteinstallation an einer Prozessleitung einer Prozessanlage nach dem Oberbegriff des Anspruchs 1.

In Prozessanlagen, wie z. B. in Chemie- und Raffinerieanlagen, werden zu Druckmessungen als Feldgeräte vor Ort installierte Messgeräte, vorzugsweise Drucktransmitter verwendet. Derartige Drucktransmitter werden beispielsweise zur Messung des Prozessmediumdrucks und zur Erfassung von Füllständen eingesetzt. Zu Durchflussmessungen werden in allgemein bekannter Weise Messblenden mit Differenzdrucktransmittern als Messgeräten verwendet.

Aus der DE 199 21 172 C1 ist bereits eine gattungsgemäße Messgeräteinstallation an einer Prozessleitung einer Prozessanlage bekannt, die mit wenigstens einer mediumbeaufschlagten Messleitung zwischen der Prozessleitung und dem Messgerät ausgebildet ist, wobei das Messgerät freitragend von der mit der Prozessleitung verbundenen wenigstens einen Messleitung gehalten ist. Weiter ist ein Absperrorgan zwischen dem Messgerät und der Prozessleitung vorgesehen, das mittels einer Stelleinrichtung zwischen einer Durchgangsposition und einer Absperrposition verstellbar ist. Mit dem Messgerät ist ein Prüfgerät koppelbar, mittels dem bei sich in der Absperrposition befindlichem Absperrorgan Wartungsarbeiten, vorzugsweise eine Spülung und/oder eine Kalibrierung, am Messgerät durchführbar sind.

Konkret ist die Messgerätinstallation hier als eine Drucktransmitterinstallation mit einem Drucktransmitter als Messgerät ausgeführt, der freitragend von der mit der Prozessleitung verbundenen Messleitung gehalten ist. Dadurch kann die Messgeräteinstallation vorteilhaft unmittelbar an der Prozessleitung angeordnet und gehalten werden, so dass die Messleitungen stabil und kurz ausgebildet werden können, wodurch zum einen der Installationsaufwand erheblich reduziert wird und zudem Messunsicherheiten durch lange Messleitungen vorteilhaft beseitigt werden können.

Zur Durchführung von Wartungsarbeiten ist es erforderlich, dass der Drucktransmitter als Messgerät von der Prozessleitung abgekoppelt wird. Dazu wird das Absperrorgan, vorzugsweise ein Kükenhahn oder ein Kugelhahn, mittels einem Handrad als Stelleinrichtung in eine Absperrposition verstellt, so dass nunmehr die erforderlichen Wartungsarbeiten am Gerät durchgeführt werden können. Solche Wartungsarbeiten umfassen regelmäßig eine Kalibrierung und/oder eine Spülung des Messgeräts. Hierzu ist am Messgerät z. B. ein Ventilblock als Anschlussblock für ein mobiles Prüfgerät vorgesehen, das vom Werker zur Durchführung der Spül- und/oder Kalibrierungsarbeiten mitzuführen ist und entsprechend an den Anschlussblock des Messgeräts anzuschließen ist. Nach dem Anschließen des Prüfgeräts kann dann je nach durchzuführenden Wartungsarbeiten eine Spülung und/oder eine Kalibrierung des Messgeräts vorgenommen werden.

Insbesondere bei solchen Messgeräteinstallationen, bei denen das Messgerät in einer ohne Hilfsmittel, wie z. B. einer Leiter, nicht erreichbaren Höhe freitragend an einer Prozessleitung einer Prozessanlage angebracht ist, ist jedoch die Durchführung der eben beschriebenen Wartungsarbeiten relativ aufwendig und mühsam, da der Werker das Prüfgerät, z. B. beim Besteigen einer Leiter mit sich mitführen muss, um die Wartungsarbeiten an dem Messgerät durchführen zu können. D. h. dass er mit der einen Hand das Prüfgerät halten muss und somit nur noch eine Hand, z. B. zum Besteigen der Leiter oder zum Durchführen weiterer Arbeiten, frei hat. Zudem ist das Prüfgerät relativ schwer, was die Durchführung derartiger Wartungsarbeiten zusätzlich erschwert. Des Weiteren besteht dadurch die Gefahr von Unfällen, wie z. B. eine Absturzgefahr, wenn der Werker das Prüfgerät in seinen Händen hält und eine relativ steile Leiter besteigt, insbesondere dann, wenn er mit der zweiten Hand noch weitere Arbeiten durchführt.

Ein ähnliches Problem tritt auf, wenn eine derartige Messgeräteinstallation an einer solchen Prozessleitung einer Prozessanlage angeordnet ist, die z. B. weniger hoch aber dafür schwer zugänglich ist, was insbesondere bei Chemie- und/oder Raffinerieanlagen häufig der Fall sein kann.

Aufgabe der Erfindung ist es daher, eine Messgeräteinstallation an einer Prozessleitung einer Prozessanlage zu schaffen, mit der Wartungsarbeiten an einem Messgerät, insbesondere bei solchen Messgeräten, die in einer ohne Hilfsmittel nicht erreichbaren Höhe freitragend an einer Prozessleitung einer Prozessanlage angebracht sind, auf einfache Weise ohne großen Arbeitsaufwand mit erhöhter Arbeitssicherheit durchführbar sind.

Diese Aufgabe wird gelöst mit den Merkmalen des Anspruchs 1.

Gemäß Anspruch 1 ist das Prüfgerät mit dem Messgerät über wenigstens eine Prüfgeräte-Leitung koppelbar dergestalt, dass das Prüfgerät beabstandet und entfernt vom Messgerät anordenbar und zur Durchführung der Wartungsarbeiten fernbedienbar ist. Weiter ist die Stelleinrichtung des Absperrorgans als Stellantrieb ausgebildet, der mit dem Absperrorgan über wenigstens eine Antriebsleitung koppelbar ist dergestalt, dass der Stellantrieb beabstandet und entfernt vom Absperrorgan anordenbar und zur Verstellung des Absperrorgans fernbedienbar ist.

Vorteilhaft brauchen bei einer derartigen Messgeräteinstallation die Wartungsarbeiten nicht direkt am Messgerät selbst durchgeführt werden, sondern können bequem und einfach beabstandet und entfernt vom Messgerät von einem gut zugänglichen Ort, z. B. vom Boden oder von einer Warte aus, durchgeführt werden. Dies ist insbesondere dann von Vorteil, wenn das Messgerät in einer ohne Hilfsmittel nicht erreichbaren Höhe freitragend an einer Prozessleitung einer Prozessanlage angebracht ist. Denn dadurch wird das z. B. mühsame und gefährliche Besteigen einer Leiter mit dem Prüfgerät vermieden. Dadurch kann somit auch die Arbeitssicherheit für die Werker erheblich erhöht werden, da die Unfallgefahr bzw. Absturzgefahr bei der Durchführung von Wartungsarbeiten am Messgerät, wie z. B. einer Kalibrierung und/oder einer Spülung erheblich reduziert ist. Vorteilhaft können somit mit einem derartigen Aufbau die mechanischen Wartungsarbeiten, wie z. B. eine Spülung und/oder eine Kalibrierung, bequem und einfach von der Ferne aus z. B. von einer Warte oder vom Boden aus, durchgeführt werden, ohne dass die Vorteile einer freitragend an einer Prozessleitung einer Prozessanlage angebrachten Messgeräteinstallation aufgegeben werden müssen. Der Anschluss der wenigstens einen Prüfgeräte-Leitung am Messgerät kann dabei grundsätzlich auch über das Absperrorgan erfolgen, das selbst wiederum z. B. integraler Bestandteil des Messgerätes sein kann, indem z. B. das Absperrorgan als eine Art Umschalthahn ausgebildet ist.

Grundsätzlich bestünde dabei die Möglichkeit, dass der Stellantrieb das Absperrorgan elektrisch betätigt wird. Insbesondere in Chemie- und/oder Raffinerieanlagen sind jedoch derartige elektrischen Betätigungen aus Gründen des Explosionsschutzes aufwändig in der Herstellung, so dass das Absperrorgan gemäß einer besonders vorteilhaften Ausgestaltung nach Anspruch 2 zu dessen Verstellung mittels dem Stellantrieb über die Antriebsleitung pneumatisch mit Druckluft als Arbeitsmedium oder hydraulisch mit einer Hydraulikflüssigkeit als Arbeitsmedium beaufschlagbar ist. Besonders bevorzugt weist hierzu der Stellantrieb nach Anspruch 3 eine Arbeitsmedium-Druckerhöhungseinheit auf, mit der die Antriebsleitung verbunden ist. Mit einer derartigen Arbeitsmedium-Druckerhöhungseinheit kann bei deren Betätigung der zur Verstellung des Absperrorgans erforderliche Druck auf besonders einfache Weise erzeugt werden. Bevorzugt ist die Arbeitsmedium-Druckerhöhungseinheit nach Anspruch 4 im Falle eines pneumatischen Stellantriebs als Luft-Kompressor, z. B. als transportabler Druckkessel, und im Falle eines hydraulischen Stellantriebs als Hydraulik-Pumpe, z. B. als transportable Pumpe, ausgebildet.

Gemäß einer besonders bevorzugten Ausführungsform hierzu ist das Absperrorgan nach Anspruch 5 in einer Grundstellung bei unbetätigtem Stellantrieb in die Durchgangsposition vorgespannt. Diese Vorspannung kann beispielsweise eine Federvorspannung sein, die besonders einfach und preiswert bei hoher Funktionssicherheit auszuführen ist. Das Absperrorgan ist dann bei einer Betätigung des Stellantriebs entgegen die Vorspannung in die Absperrposition überführbar. Mit einem derartigen Aufbau wird auf besonders einfache und funktionssichere Weise erreicht, dass das Absperrorgan sich nur bei betätigtem Stellantrieb in der Absperrposition befindet, d. h. nur dann, wenn das Absperrorgan mit einem Arbeitsmedium beaufschlagt ist. Vorteilhaft ist für eine derartige Beaufschlagung nur eine einzige Zuführleitung zwischen Absperrorgan und Stellantrieb erforderlich. Alternativ dazu wäre jedoch ein Aufbau möglich, bei dem die Antriebsleitung zwei separate Leitungen umfasst, von denen über die eine ein Absperren des Absperrorgans und über die andere ein Öffnen des Absperrorgans erfolgt. Das ist mit den Merkmalen des Anspruches 6 beansprucht.

Grundsätzlich gibt es verschiedene Möglichkeiten das Absperrorgan in der Messleitung auszubilden. Nach Anspruch 7 ist das Absperrorgan vorzugsweise ein Kugelhahn oder ein Kükenhahn, mit denen eine besonders gute Abdichtung in der Absperrposition erzielbar ist.

Alternativ hierzu kann gemäß einer besonders bevorzugten Ausführungsform nach Anspruch 8 das Absperrorgan aber auch als Umschaltorgan ausgebildet sein, mit dem sowohl die wenigstens eine Prüfgeräte-Leitung als auch die wenigstens eine Antriebsleitung gekoppelt ist. Durch diese Integration sämtlicher Anschlussstellen der wenigstens einen Prüfgeräte-Leitung und der wenigstens einen Antriebsleitung an einem Bauteil lässt sich ein besonders kompakter und eng bauender Aufbau realisieren. Zudem ist eine derartige Umschaltung auf einfache Weise z. B. mittels einem Wegehahn möglich. So ist beispielsweise bei einer besonders bevorzugten Ausgestaltung mit einem 3/2-Wegehahn an dem Umschaltorgan eine Antriebsleitung und zwei Prüfgeräte-Leitungen angeschlossen, wobei der 3/2-Wegehahn dann in einer für z. B. 3/2-Umschaltventile allgemein bekannten Weise in die entsprechenden Positionen umgeschalten werden kann. Eine derartige Umschalttechnik ist somit relativ einfach herstellbar und auch beherrschbar.

Gemäß einer weiteren besonders bevorzugten Ausgestaltung nach Anspruch 9 kann vorgesehen sein, dass das Messgerät über wenigstens eine Zusatz-Spülleitung mit einer Zusatz-Spüleinrichtung koppelbar ist, wobei die Zusatz-Spüleinrichtung beabstandet und entfernt vom Messgerät anordenbar und zur Spülung des Messgerätes und/oder der wenigstens einen Prüfgeräte-Leitung und/oder der wenigstens einen Antriebsleitung fernbedienbar ist. Ein derartiger Aufbau ist insbesondere dann von Vorteil, wenn über die wenigstens eine Prüfgeräte-Leitung eine Spülung zur Beseitigung von giftigen Medien im Messgerätebereich erfolgt. Denn dann ist über eine derartige Zusatz-Spülleitung auch eine Spülung der wenigstens einen Prüfgeräte-Leitung, in der gegebenenfalls noch Rückstände des giftigen Mediums enthalten sind, denkbar. Ebenso kann über eine derartige Zusatz-Spülleitung gegebenenfalls auch eine Spülung der Antriebsleitung erfolgen bzw. ein Spülvorgang am Messgerät unterstützend erfolgen. Dadurch wird die Flexibilität hinsichtlich der Durchführung von Wartungsarbeiten, wie z. B. einer Spülung, erheblich erhöht. Gegebenenfalls kann über eine derartige Zusatz-Spülleitung aber auch als Redundanz eine Kalibrierung des Messgeräts mittels einem geeigneten Kalibriermedium vorgenommen werden. Dadurch wäre die Zusatz-Spülleitung in einer Doppelfunktion auch vorteilhaft zur Kalibrierung eines Messgeräts heranziehbar. Eine derartige Zusatz-Spüleinrichtung kann gegebenenfalls als transportable Einheit zusammen mit z. B. einem Luft-Kompressor oder einer Hydraulik-Pumpe als transportable Einheit ausgebildet werden. Auch eine Ausbildung als separate transportable Einheit ist grundsätzlich möglich.

Nach Anspruch 10 ist die Prüfgeräte-Leitung zur Spülung des Messgerätes mit einem Spülmedium, vorzugsweise einer Spülflüssigkeit oder einem Spülgas, z. B. einem Inertgas, bevorzugt Stickstoff, oder zur Kalibrierung des Messgerätes mit einem Kalibriermedium beaufschlagbar. Vorteilhaft weist hierzu nach Anspruch 11 die Prüfgeräte-Leitung wenigstens zur Spülung des Messgerätes eine Zuführleitung zur Zuführung des Spülmediums zum Messgerät sowie eine Abführleitung für das Spülmedium vom Messgerät weg auf. Die Abführleitung kann beispielsweise ebenfalls zum Prüfgerät zurückgeführt werden und dort in einem entsprechenden Abwasseraufnahmeraum münden. Mit einer derartigen Zuführleitung und Abführleitung wird erreicht, dass das Verunreinigungen aufweisende Spülmedium kontrolliert aus dem Messgerät abgeführt werden kann. Gemäß einer besonders bevorzugten Ausgestaltung hierzu bildet die Abführleitung nach Anspruch 12 z. B. im Falle einer Kalibrierung eine zweite Zuführleitung für das Kalibriermedium zum Messgerät. Somit kann die Abführleitung bei Bedarf auch in einer Doppelfunktion als Zuführleitung zur Kalibrierung des Messgerätes verwendet werden.

Nach Anspruch 13 weist das Prüfgerät eine Prüfgeräte-Druckerhöhungseinheit auf, mit der die Prüfgeräte-Leitung verbunden ist. Auch hier ist die Druckerhöhungseinheit vorzugsweise als Kompressor ausgebildet, der die zuvor in Verbindung mit der Druckerhöhungseinheit des Stellantriebs erläuterten Vorteile aufweist.

Grundsätzlich besteht bei dem erfindungsgemäßen Aufbau die Möglichkeit, die wenigstens eine Antriebsleitung und/oder die wenigstens eine Prüfgeräte-Leitung vom Messgerät weg z. B. nach unten zu einem stationär am Bodenbereich angeordneten Anschlussblock zu führen. An diesem Anschlussblock können dann ebenfalls stationär, z. B. in der Art einer Warte das Prüfgerät und der Stellantrieb an den entsprechend zugeordneten Leitungen angeschlossen sein. Bei einem derartigen Aufbau ist jedoch für jede Messgeräteinstallation ein separates Prüfgerät sowie ein separater Stellantrieb erforderlich. Besonders bevorzugt ist daher gemäß den Merkmalen des Anspruchs 14 und des Anspruchs 15 vorgesehen, dass sowohl das Prüfgerät als auch der Stellantrieb als mobile Einrichtung ausgebildet sind, die zu einem freien Ende der Prüfgeräte-Leitung bzw. der Antriebsleitung transportierbar und/oder fahrbar sind und entsprechend mit dem zugeordneten freien Ende der jeweiligen Leitung verbindbar sind. Dadurch kann die Anzahl der Prüfgeräte und der Stellantriebe erheblich reduziert werden, da die Prüfgeräte und Stellantriebe von einer Messgeräteinstallation zur anderen Messgeräteinstallation transportiert bzw. verfahren werden können. Z. B. können das Prüfgerät und der Stellantrieb nach Anspruch 16 auf derselben mobilen Einrichtung transportiert und angeordnet sein, wozu vorzugsweise die freien Enden der Prüfgeräteleitung und der Antriebsleitung benachbart zueinander z. B. bodenseitig angeordnet sind. Die freien Enden können hierzu an entsprechenden Stützen in einer geeigneten Arbeitshöhe angeordnet sein. Gemäß einer besonders bevorzugten Ausgestaltung der Erfindung können sowohl das Prüfgerät als auch der Stellantrieb automatisiert ausgebildet sein, d. h. dass diese bei einer Durchführung von Wartungsarbeiten entsprechend automatisiert an die freien Enden der wenigstens einen Prüfgeräte-Leitung und der wenigstens einen Antriebsleitung hin transportiert und/oder verfahren werden können. Dadurch können derartige Wartungsarbeiten auch von ungelernten Hilfskräften auf einfache Weise durchgeführt werden. Weiter können die Verbindungen zwischen den freien Enden der Prüfgeräte-Leitung und der Antriebsleitung mit dem Prüfgerät bzw. mit dem Stellantrieb in der Art einer Schnellkupplungs-Verbindung ausgebildet sein, die in allgemein bekannter Weise eine schnelle und funktionssichere Verbindung mit guter Absperrfunktion aufweisen.

Wie dies bereits oben ausführlich erläutert worden ist, ist eine derartige Messgeräteinstallation insbesondere für derartige Messgeräte von Vorteil, die in einer ohne Hilfsmittel nicht erreichbaren Höhe freitragend an einer Prozessleitung einer Prozessanlage angebracht sind. Dies ist mit den Merkmalen des Anspruchs 17 nochmals separat beansprucht.

Das Messgerät ist vorzugsweise ein Drucktransmitter oder ein Differenzdrucktransmitter, mit denen eine Messung des Prozessmediumdrucks sowie die Erfassung von Füllständen besonders einfach und funktionssicher durchführbar ist.

Nach Anspruch 18 sind die Leitungen, d. h. die wenigstens eine Prüfgeräte-Leitung sowie die wenigstens eine Antriebs-Leitung entweder als Schlauch- und/oder Rohrleitungen ausgeführt.

Die Erfindung wird nachfolgend anhand einer Zeichnung näher erläutert.

Es zeigen:
- Fig. 1: eine schematische Darstellung einer ersten Ausführungsform der erfindungsgemäßen Messgeräteinstallation, und
- Fig. 2: eine schematische Darstellung einer alternativen Ausführungsform einer erfindungsgemäßen Messgeräteinstallation.

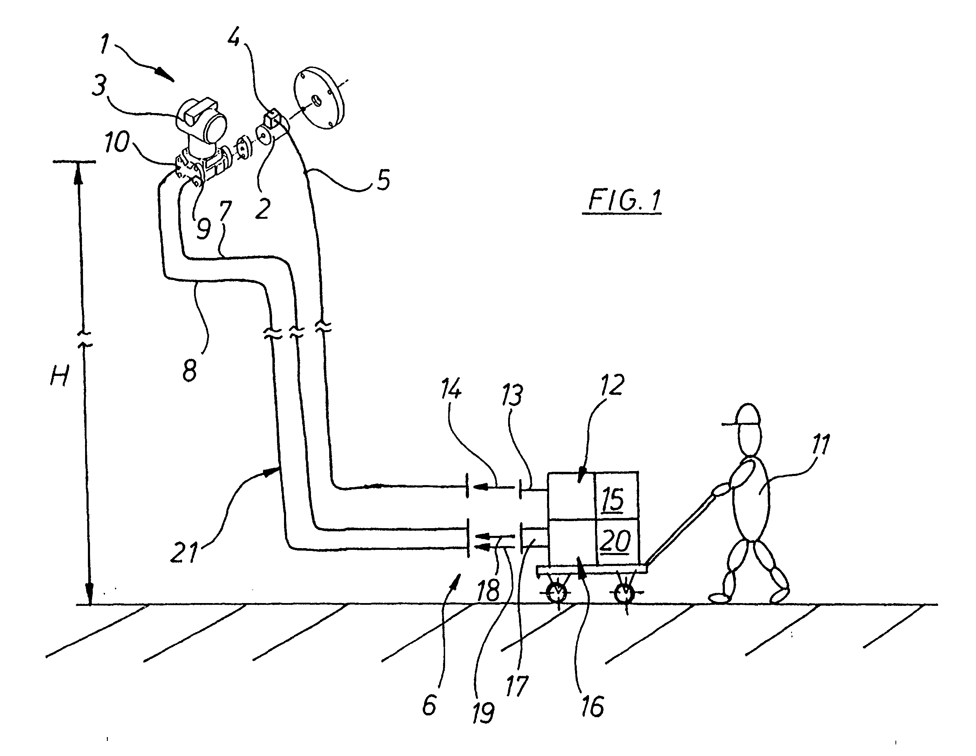

Fig. 1 zeigt schematisch eine Messgeräteinstallation 1 an einer hier nicht dargestellten Prozessleitung einer ebenfalls nicht dargestellten Prozessanlage. Die Messgerätinstallation 1 umfasst eine mediumbeaufschlagte Messleitung 2 zwischen der hier nicht dargestellten Prozessleitung und einem Drucktransmitter 3 als Messgerät, wobei der Drucktransmitter 3 freitragend von der mit der Prozessleitung verbundenen Messleitung 2 gehalten ist.

Wie dies in der Darstellung der Fig. 1 lediglich schematisch mit der Höhe H eingezeichnet ist, ist der Drucktransmitter 3 hier in einer ohne Hilfsmittel, wie z. B. einer Leiter nicht erreichbaren Höhe freitragend an der Prozessleitung der Prozessanlage angebracht.

Wie dies der schematischen Darstellung der Fig. 1 zudem weiter entnommen werden kann, ist zwischen dem Drucktransmitter 3 und der hier nicht dargestellten Prozessleitung ein Absperrorgan 4 vorgesehen, der hier beispielsweise als Kükenhahn oder Kugelhahn ausgebildet sein kann. Von diesem Absperrorgan 4 ausgehend ist eine Antriebsleitung 5 nach unten auf eine geeignete Anschlusshöhe bis in den Bodenbereich 6 geführt.

Weiter ist vom Drucktransmitter 3 auf einer der Messleitung 2 gegenüberliegenden Seite von entsprechenden Anschlüssen 9, 10 ausgehend jeweils eine Leitung 7, 8 als Bestandteil einer Prüfgeräte-Leitung 21 mit einem freien Ende nach unten auf eine geeignete Höhe bis in etwa zum Bodenbereich 6 geführt.

Sowohl die Leitungen 7,8 der Prüfgeräte-Leitung 21 als auch die Antriebsleitung 5 sind hier beispielsweise als Schlauchleitungen ausgeführt.

Um am Drucktransmitter 3 Wartungsarbeiten, wie z. B. eine Spülung oder eine Kalibrierung vom Boden aus bequem durchführen zu können, ist der Drucktransmitter 3 zuerst von der hier nicht dargestellten Prozessleitung abzukoppeln. Dazu ist das Absperrorgan 4 in eine Absperrposition zu bringen. Von einem Werker 11 wird hierzu ein als mobile Einrichtung ausgebildeter und verfahrbarer Stellantrieb 12, der hier beispielhaft als Pneumatik-Stellantrieb ausgebildet ist, über eine Anschlussleitung 13 mit der Antriebsleitung 5 gekoppelt, wie dies in der schematischen Darstellung der Fig. 1 durch den Pfeil 14 lediglich äußerst beispielhaft gezeigt ist. Der Pneumatik-Stellantrieb 15 umfasst einen Luftkompressor 15 der bei betätigtem Pneumatik-Stellantrieb 12 das Absperrorgan 4 über die Antriebsleitung 5 mit Druckluft beaufschlagt und diese aus einer hier nicht dargestellten Durchgangsposition in eine Absperrposition überführt. Das Absperrorgan ist hier beispielhaft in die Durchgangsposition vorgespannt, was hier jedoch nicht dargestellt ist, so dass die Überführung in die Absperrposition entgegen diese Vorspannung erfolgt.

In diesem von der Prozessleitung abgekoppelten Zustand können nun z. B. eine Spülung und/oder eine Kalibrierung des Drucktransmitters durchgeführt werden. Dazu werden die freien Enden der Leitungen 7, 8 der Prüfgeräte-Leitung 21 an ein ebenfalls als mobile Einrichtung ausgebildetes und zusammen mit dem Stellantrieb 12 verfahrbares Prüfgerät 16, d. h. vorzugsweise an einen Anschlussblock 17 des Prüfgerätes 16 angeschlossen, wie dies in der schematischen Darstellung der Fig. 1 durch die Pfeile 18, 19 lediglich äußerst schematisch gezeigt ist.

Im angeschlossenen Zustand des Prüfgeräts 16 an den Drucktransmitter 3 kann dann durch entsprechende Betätigung des Prüfgeräts 16 über die Leitungen 7, 8 der Prüfgeräte-Leitung 21 eine Spülung und/oder Kalibrierung des Drucktransmitters 3 in herkömmlicher Weise bequem vom Boden aus vorgenommen werden. Von den Leitungen 7, 8 der Prüfgeräte-Leitung 21 kann z. B. die Leitung 7 bei der Spülung des Drucktransmitters 3 als Zuführleitung zur Zuführung des Spülmediums zum Drucktransmitter 3 und dann entsprechend die Leitung 8 als Abführleitung für das Spülmedium vom Messgerät 3 weg vorgesehen werden. Hierzu ist eine ebenfalls lediglich äußerst schematisch gezeigte Druckerhöhungseinheit 20 des Prüfgerätes 16 vorteilhaft.

Alternativ zu der hier lediglich äußerst schematisch dargestellten Anordnung des Prüfgeräts 16 des Stellantriebs 12 auf einem gemeinsam verfahrbaren Wagen können jedoch auch sämtliche anderen mobilen Möglichkeiten vorgesehen sein, so z. B. ein separat zum Stellantrieb 12 verfahrbares Prüfgerät bzw. ein tragbares Prüfgerät, worauf hier jedoch nicht mehr näher eingegangen wird.

Nach dem Durchführen der Wartungsarbeiten, z. B. der Spül- und/oder Kalibrierungsarbeiten, am Drucktransmitter 3 kann das Prüfgerät 16 wieder von den Leitungen 7, 8 der Prüfgeräte-Leitung 21 einfach abgekoppelt werden, was bei einer Ausbildung als Schnellkupplungs-Verbindung besonders einfach durchzuführen ist. Anschließend kann dann der Stellantrieb 12 wieder in seine unbetätigte Stellung gebracht werden, so dass das Absperrorgan 4 nicht mehr durch die Druckluft beaufschlagt wird. Das Absperrorgan 4 kann dann durch die vorher bereits erwähnte Vorspannung in die Durchgangsposition, z. B. eine Federvorspannung, wieder selbsttätig in die Durchgangsposition gestellt werden, so dass wieder eine Verbindung zwischen der Messleitung und der Prozessleitung herstellbar ist. Alternativ dazu kann jedoch auch ohne eine derartige Vorspannung eine Rückstellung in die Durchgangsposition mittels des Stellantriebs 12 über die Antriebsleitung 5 dadurch erzielt werden, dass z. B. eine weitere parallele Leitung vorgesehen ist, die gegebenenfalls die Rückstellung in die Durchgangsposition bewirkt.

Die Erfindung wurde hier beispielhaft anhand eines Drucktransmitters 3 erläutert. Ebenso ist ein derartiger Aufbau selbstverständlich auch mit einer Differenzdrucktransmitterinstallation möglich, bei der parallel zur Messleitung 2 eine weitere Messleitung, die hier nicht dargestellt ist, vorgesehen ist. Auch diese Messleistung ist über ein separates Absperrorgan absperrbar, so dass in einem solchen Fall eine weitere Antriebsleitung von diesem Absperrorgan nach unten bis in etwa zum Bodenbereich 6 geführt ist und dort an den Stellantrieb anschließbar ist.

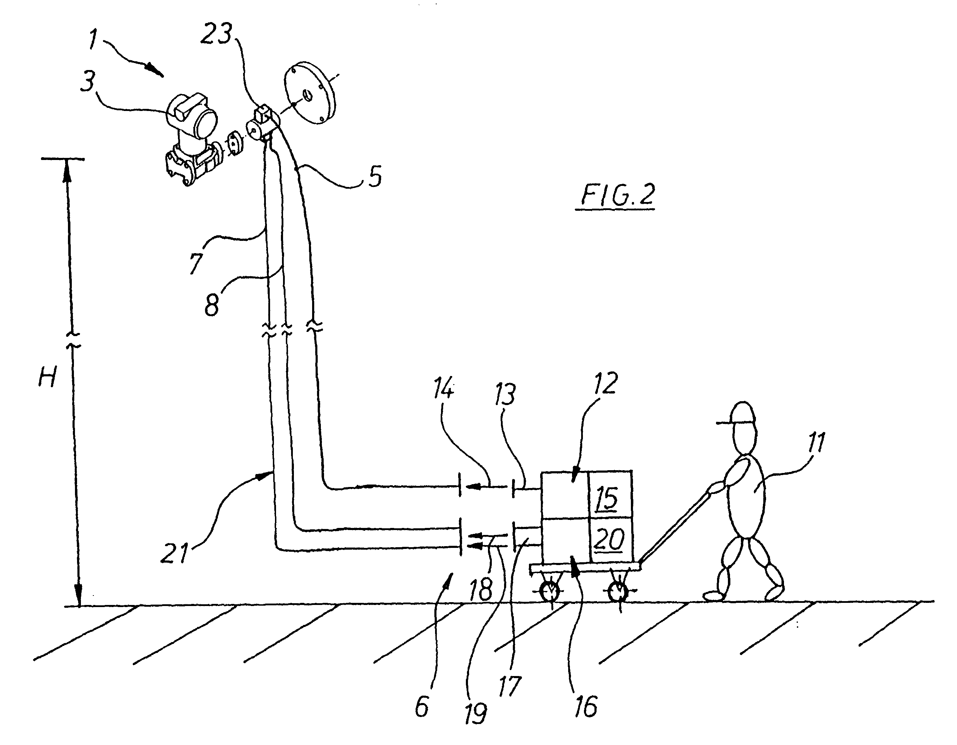

In der Fig. 2 ist eine alternative Ausführungsform einer Messgeräteinstallation 22 gezeigt, die im Wesentlichen den gleichen Aufbau zeigt wie die Messgeräteinstallation 1 der Fig. 1. Im Unterschied zur Messgeräteinstallation 1 der Fig. 1 ist jedoch bei dieser Messgeräteinstallation 22 das Absperrorgan als Umschaltorgan 23, z. B. in der Art eines 3/2-Wegehahns ausgebildet, mit dem die Leitungen 7, 8 der Prüfgeräte-Leitung 21 und die Antriebsleitung 5 gekoppelt sind. Mit einem derartigen Umschaltorgan 23 kann das Absperrorgan entsprechend in die Absperrposition oder in die Durchgangsposition verstellt werden, wie dies allgemein bekannt ist, z. B. in Verbindung mit 3/2-Wegeventilen, so dass hierauf nicht mehr näher eingegangen wird. Mit einem derartigen Umschaltorgan 23 ist ein besonders kompakter Aufbau möglich.

## Patentansprüche

1. Messgeräteinstallation an einer Prozessleitung einer Prozessanlage
mit wenigstens einer mediumbeaufschlagten Messleitung (2) zwischen der Prozessleitung und dem Messgerät (3), vorzugsweise einem Drucktransmitter oder einem Differenzdrucktransmitter, wobei das Messgerät (3) freitragend von der mit der Prozessleitung verbundenen wenigstens einen Messleitung (2) gehalten ist,
mit einem Absperrorgan (4; 23) zwischen dem Messgerät (3) und der Prozessleitung, das mittels einer Stelleinrichtung zwischen einer Durchgangsposition und einer Absperrposition verstellbar ist, und
mit einem mit dem Messgerät (3) koppelbaren Prüfgerät (16), mittels dem bei sich in der Absperrposition befindlichem Absperrorgan (4; 23) Wartungsarbeiten, vorzugsweise eine Spülung und/oder eine Kalibrierung, am Messgerät (3) durchführbar sind,
**dadurch gekennzeichnet,**
**dass** das Prüfgerät (16) mit dem Messgerät (3) über wenigstens eine Prüfgeräte-Leitung (21) koppelbar ist dergestalt, dass das Prüfgerät (16) beabstandet und entfernt vom Messgerät (3) anordenbar und zur Durchführung der Wartungsarbeiten fernbedienbar ist, und
**dass** die Stelleinrichtung des Absperrorgans (4; 23) als Stellantrieb (12) ausgebildet ist, der mit dem Absperrorgan (4; 23) über wenigstens eine Antriebsleitung (5) koppelbar ist dergestalt, dass der Stellantrieb (12) beabstandet und entfernt vom Absperrorgan (4; 23) anordenbar und zur Verstellung des Absperrorgans (4; 23) fernbedienbar ist.

2. Messgeräteinstallation nach Anspruch 1, **dadurch gekennzeichnet, dass** das Absperrorgan (4; 23) zu dessen Verstellung mittels dem Stellantrieb (12) über die Antriebsleitung (5) pneumatisch mit Druckluft als Arbeitsmedium oder hydraulisch mit einer Hydraulikflüssigkeit als Arbeitsmedium beaufschlagbar ist.

3. Messgeräteinstallation nach Anspruch 2, **dadurch gekennzeichnet, dass** der Stellantrieb (12) eine Arbeitsmedium-Druckerhöhungseinheit (15) aufweist, mit der die Antriebsleitung (5) verbunden ist.

4. Messgeräteinstallation nach Anspruch 3, **dadurch gekennzeichnet, dass** die Arbeitsmedium-Druckerhöhungseinheit im Falle eines pneumatischen Stellantriebs als Luftkompressor (15) und im Falle eines hydraulischen Stellantriebs als Hydraulik-Pumpe ausgebildet ist.

5. Messgeräteinstallation nach einem der Ansprüche 1 bis 4, **dadurch gekennzeichnet,**
**dass** das Absperrorgan (4; 23) in einer Grundstellung bei unbetätigtem Stellantrieb (12) in die Durchgangsposition vorgespannt, vorzugsweise federvorgespannt, ist, und
**dass** das Absperrorgan (4; 23) bei einer Betätigung des Stellantriebs (12) entgegen die Vorspannung in die Absperrposition überführbar ist.

6. Messgeräteinstallation nach einem der Ansprüche 1 bis 4, **dadurch gekennzeichnet,**
**dass** die Antriebsleitung zwei separate Leitungen umfasst, von denen eine erste Leitung so mit dem Absperrorgan gekoppelt ist, dass über diese bei einer entsprechenden Ansteuerung nur ein Überführen des Absperrorgans in die Absperrposition erfolgt und von denen eine zweite Leitung so mit dem Absperrorgan gekoppelt ist, dass über diese bei einer entsprechenden Ansteuerung nur ein Überführen des Absperrorgans in die Durchgangsposition erfolgt.

7. Messgeräteinstallation nach einem der Ansprüche 1 bis 6, **dadurch gekennzeichnet, dass** das Absperrorgan (4) ein Kugelhahn oder ein Kükenhahn ist.

8. Messgeräteinstallation nach einem der Ansprüche 1 bis 6, **dadurch gekennzeichnet, dass** das Absperrorgan als Umschaltorgan (23), vorzugsweise als Wegehahn, höchst bevorzugt als 3/2-Wegehahn, ausgebildet ist, mit dem die wenigstens eine Prüfgeräte-Leitung (21) und die wenigstens eine Antriebsleitung (5) gekoppelt ist.

9. Messgeräteinstallation nach einem der Ansprüche 1 bis 8, **dadurch gekennzeichnet, dass** das Messgerät über wenigstens eine Zusatz-Spülleitung mit einer Zusatz-Spüleinrichtung koppelbar ist dergestalt, dass die Zusatz-Spüleinrichtung beabstandet und entfernt vom Messgerät anordenbar und zur Spülung des Messgeräts und/oder der wenigstens einen Prüfgeräte-Leitung und/oder der wenigstens einen Antriebsleitung fernbedienbar ist.

10. Messgeräteinstallation nach einem der Ansprüche 1 bis 9, **dadurch gekennzeichnet, dass** die Prüfgeräte-Leitung (21) zur Spülung des Messgerätes (3) mit einem Spülmedium oder zur Kalibrierung des Messgerätes (3) mit einem Kalibriermedium beaufschlagbar ist.

11. Messgeräteinstallation nach Anspruch 10, **dadurch gekennzeichnet, dass** die Prüfgeräte-Leitung (21) wenigstens zur Spülung des Messgerätes (3) eine Zuführleitung (7) zur Zuführung des Spülmediums zum Messgerät (3) sowie eine Abführleitung (8) für das Spülmedium vom Messgerät (3) weg aufweist.

12. Messgeräteinstallation nach Anspruch 11, **dadurch gekennzeichnet, dass** die Abführleitung (8) im Falle einer Kalibrierung eine zweite Zuführleitung für das Kalibriermedium zum Messgerät (3) bildet.

13. Messgeräteinstallation nach einem der Ansprüche 1 bis 12, **dadurch gekennzeichnet, dass** das Prüfgerät (16) eine Prüfgeräte-Druckerhöhungseinheit (20), vorzugsweise einen Kompressor, aufweist.

14. Messgeräteinstallation nach einem der Ansprüche 1 bis 13, **dadurch gekennzeichnet, dass** das Prüfgerät (16) als mobile Einrichtung ausgebildet ist, die zu einem freien Ende der wenigstens einen Prüfgeräte-Leitung (21) transportierbar und/oder fahrbar ist, vorzugsweise automatisiert transportierbar und/oder fahrbar ist, und die mit dem freien Ende der Prüfgeräte-Leitung (21) verbindbar ist, vorzugsweise automatisiert verbindbar ist, wobei die Verbindung vorzugsweise als Schnellkupplungs-Verbindung ausgebildet ist.

15. Messgeräteinstallation nach einem der Ansprüche 1 bis 14, **dadurch gekennzeichnet, dass** der Stellantrieb (12) als mobile Einrichtung ausgebildet ist, die zu einem freien Ende der wenigstens einen mit dem Absperrorgan (4; 23) gekoppelten Antriebsleitung (5) transportierbar und/oder fahrbar ist, vorzugsweise automatisiert transportierbar und/oder fahrbar ist, und die mit dem freien Ende der Antriebsleitung (5) verbindbar ist, vorzugsweise automatisiert verbindbar ist, wobei die Verbindung vorzugsweise als Schnellkupplungs-Verbindung ausgebildet ist.

16. Messgeräteinstallation nach Anspruch 14 und Anspruch 15, **dadurch gekennzeichnet, dass** die freien Enden der Prüfgeräte-Leitung (21) und der Antriebsleitung (5) benachbart zueinander angeordnet sind dergestalt, dass das Prüfgerät (16) und der Stellantrieb (12) auf derselben mobilen Einrichtung anordenbar sind.

17. Messgeräteinstallation nach einem der Ansprüche 1 bis 16, **dadurch gekennzeichnet,**
**dass** das Messgerät (3) in einer ohne Hilfsmittel nicht erreichbaren Höhe freitragend an einer Prozessleitung einer Prozessanlage angebracht ist, und
**dass** die wenigstens eine Prüfgeräte-Leitung (21) vom Messgerät (3) weg sowie die wenigstens eine Antriebsleitung (5) vom Absperrorgan (4; 23) weg sowie gegebenenfalls wenigstens eine Zusatz-Spülleitung vom Messgerät (3) weg mit einem freien Ende nach unten, vorzugsweise bis in etwa in den Bodenbereich (6), geführt sind.

18. Messgeräteinstallation nach einem der Ansprüche 1 bis 17, **dadurch gekennzeichnet, dass** die Leitungen (5, 7, 8) als Schlauch- und/oder Rohrleitungen ausgebildet sind.

## Claims

1. Measuring device installation on a process line of a process plant
with at least one medium-impinged measuring line (2) between the process line and the measuring device (3), preferably a pressure transmitter or a differential pressure transmitter, the measuring device (3) being held in a self-supporting manner by the at least one measuring line (2) connected to the process line,
with a shut-off element (4; 23) between the measuring device (3) and the process line, which element is adjustable between a flow position and a shut-off position by means of an adjusting device, and
with a testing device (16), which can be coupled to the measuring device (3) and by means of which maintenance work, preferably flushing and/or calibration, can be carried out on the measuring device (3) when the shut-off element (4; 23) is in the shut-off position,
**characterized**
**in that** the testing device (16) can be coupled to the measuring device (3) by means of at least one testing device line (21) in such a way that the testing device (16) can be arranged at a distance and remote from the measuring device (3) and can be remotely controlled for carrying out the maintenance work, and
**in that** the adjusting device of the shut-off element (4; 23) is formed as a servo-drive (12), which can be coupled to the shut-off element (4; 23) by means of at least one drive line (5) in such a way that the servo-drive (12) can be arranged at a distance and remote from the shut-off element (4; 23) and can be remotely controlled for adjusting the shut-off element (4; 23).

2. Measuring device installation according to Claim 1, **characterized in that**, for its adjustment by means of the servo-drive (12), the shut-off element (4; 23) can be impinged via the drive line (5) pneumatically with compressed air as the working medium or hydraulically with a hydraulic fluid as the working medium.

3. Measuring device installation according to Claim 2, **characterized in that** the servo-drive (12) has a working-medium pressure-increasing unit (15), to which the drive line (5) is connected.

4. Measuring device installation according to Claim 3, **characterized in that** the working-medium pressure-increasing unit is formed in the case of a pneumatic servo-drive as an air compressor (15) and in the case of a hydraulic servo-drive as a hydraulic pump.

5. Measuring device installation according to one of Claims 1 to 4, **characterized in that**
in a basic position with the servo-drive (12) unactuated, the shut-off element (4; 23) is biased, preferably spring-biased, into the flow position, and
**in that,** when the servo-drive (12) is actuated, the shut-off element (4; 23) can be transferred into the shut-off position counter to the biasing.

6. Measuring device installation according to one of Claims 1 to 4, **characterized in that**
the drive line comprises two separate lines, of which a first line is coupled to the shut-off element in such a way that, when there is a corresponding activation, only a transfer of the shut-off element into the shut-off position takes place by means of this line, and of which a second line is coupled to the shut-off element in such a way that, when there is a corresponding activation, only a transfer of the shut-off element into the flow position takes place by means of this line.

7. Measuring device installation according to one of Claims 1 to 6, **characterized in that** the shut-off element (4) is a ball cock or a tap cock.

8. Measuring device installation according to one of Claims 1 to 6, **characterized in that** the shut-off element is formed as a changeover element (23), preferably as a directional control cock, most preferably as a 3/2-way directional control cock, to which the at least one testing device line (21) and the at least one drive line (5) are coupled.

9. Measuring device installation according to one of Claims 1 to 8, **characterized in that** the measuring device can be coupled to an additional flushing device by means of at least one additional flushing line in such a way that the additional flushing device can be arranged at a distance and remote from the measuring device and can be remotely controlled for flushing the measuring device and/or the at least one testing device line and/or the at least one drive line.

10. Measuring device installation according to one of Claims 1 to 9, **characterized in that** the testing device line (21) can be impinged with a flushing medium for flushing the measuring device (3) or can be impinged with a calibrating medium for calibrating the measuring device (3).

11. Measuring device installation according to Claim 10, **characterized in that**, at least for flushing the measuring device (3), the testing device line (21) has a feed line (7) for feeding the flushing medium to the measuring device (3) and a discharge line (8) for removing the flushing medium from the measuring device (3).

12. Measuring device installation according to Claim 11, **characterized in that**, in the case of calibration, the discharge line (8) forms a second feed line for the calibrating medium to the measuring device (3).

13. Measuring device installation according to one of Claims 1 to 12, **characterized in that** the testing device (16) has a testing-device pressure-increasing unit (20), preferably a compressor.

14. Measuring device installation according to one of Claims 1 to 13, **characterized in that** the testing device (16) is formed as a mobile device which can be transported and/or moved to a free end of the at least one testing device line (21), preferably can be transported and/or moved in an automated manner, and which can be connected to the free end of the testing device line (21), preferably can be connected in an automated manner, the connection preferably being formed as a quick-coupling connection.

15. Measuring device installation according to one of Claims 1 to 14, **characterized in that** the servo-drive (12) is formed as a mobile device which can be transported and/or moved to a free end of the at least one drive line (5) coupled to the shut-off element (4; 23), preferably can be transported and/or moved in an automated manner, and which can be connected to the free end of the drive line (5), preferably can be connected in an automated manner, the connection preferably being formed as a quick-coupling connection.

16. Measuring device installation according to Claim 14 and Claim 15, **characterized in that** the free ends of the testing device line (21) and of the drive line (5) are arranged adjacent to each other in such a way that the testing device (16) and the servo-drive (12) can be arranged on the same mobile device.

17. Measuring device installation according to one of Claims 1 to 16, **characterized**
**in that** the measuring device (3) is attached to a process line of a process plant in a self-supporting manner at a height which cannot be reached unaided, and
**in that** the at least one testing device line (21) is led away from the measuring device (3) and the at least one drive line (5) is led away from the shut-off element (4; 23) and, if appropriate, at least one additional flushing line is led away from the measuring device (3) with a free end downwards, preferably down to somewhere in the region of the ground (6).

18. Measuring device installation according to one of Claims 1 to 17, **characterized in that** the lines (5, 7, 8) are formed as hose lines and/or pipelines.

## Revendications

1. Installation d'appareil de mesure, sur une conduite de processus d'une installation de traitement,
comprenant au moins une conduite de mesure (2), sollicitée par un fluide, entre la conduite de processus et l'appareil de mesure (3), avec, de préférence, un transmetteur de pression ou un transmetteur de pression différentiel, l'appareil de mesure (3) étant maintenu en porte-à-faux par la au moins une conduite de mesure (2) reliée à la conduite de processus,
avec un organe d'isolement (4 ; 23) entre l'appareil de mesure (3) et la conduite de processus, réglable, au moyen d'un dispositif de réglage, entre une position passante et une position isolante, et
avec un appareil d'essai (16), susceptible d'être couplé à l'appareil de mesure (3), appareil d'essai au moyen duquel, lorsque l'organe d'isolement (4 ; 23) se trouve à la position isolante, des travaux d'entretien, de préférence un rinçage et/ou un étalonnage, sont susceptibles d'être effectués sur l'appareil de mesure (3),
**caractérisée en ce que**
l'appareil d'essai (16) est susceptible d'être couplé à l'appareil de mesure (3) par l'intermédiaire d'au moins une conduite pour appareil d'essai (21), de manière que l'appareil d'essai (16) puisse être agencé à distance et loin de l'appareil de mesure (3), et puisse être télécommandé pour procéder aux travaux d'entretien,
**en ce que** le dispositif de réglage de l'organe d'isolement (4 ; 23) est réalisé sous la forme d'entraînement de réglage (12), susceptible d'être couplé à l'organe d'isolement (4 ; 23) par l'intermédiaire d'au moins une conduite d'actionnement (5), de manière que l'entraînement de réglage (12) puisse être agencé à distance et loin de l'organe d'isolement (4 ; 23), et puisse être télécommandé pour manoeuvrer l'organe d'isolement (4 ; 23).

2. Installation d'appareil de mesure selon la revendication 1, **caractérisée en ce que** l'organe d'isolement (4 ; 23) est susceptible d'être sollicité pour sa manoeuvre au moyen de l'entraînement de réglage (12), par l'intermédiaire de la conduite d'actionnement (5), de façon pneumatique, avec de l'air comprimé en tant que fluide de travail, ou de façon hydraulique, avec un liquide hydraulique en tant que fluide de travail.

3. Installation d'appareil de mesure selon la revendication 2, **caractérisée en ce que** l'entraînement de réglage (12) présente une unité d'augmentation de pression de fluide de travail (15) reliée à la conduite d'actionnement (5).

4. Installation d'appareil de mesure selon la revendication 3, **caractérisée en ce que** l'unité d'augmentation de la pression de fluide de travail, dans le cas d'un entraînement de réglage de nature pneumatique, est réalisée sous la forme de compresseur d'air (15) et, dans le cas d'un entraînement de réglage de nature hydraulique, est réalisée sous la forme de pompe hydraulique.

5. Installation d'appareil de mesure selon l'une des revendications 1 à 4, **caractérisée en ce que**
l'organe d'isolement (4 ; 23), en une position de base, alors que l'entraînement de réglage (12) n'est pas actionné, est précontraint à la position passante, de préférence précontraint sous l'action d'un effet élastique, et
**en ce que** l'organe d'isolement (4 ; 23), lors d'un actionnement de l'entraînement de réglage (12), est susceptible d'être passé à la position isolante, la manoeuvre se faisant à l'encontre de l'effet de précontrainte.

6. Installation d'appareil de mesure selon l'une des revendications 1 à 4, **caractérisée en ce que**
la conduite d'actionnement comprend deux conduites séparées, dont une première conduite est couplée à l'organe d'isolement, de manière que, par l'intermédiaire de celle-ci, lors d'une commande d'attaque correspondante, seul un passage de l'organe d'isolement à la position isolante puisse se faire, et dont une deuxième conduite est couplée à l'organe d'isolement de manière que, par l'intermédiaire de celle-ci, lors d'une commande d'attaque correspondante, seul un passage de l'organe d'isolement à la position passante puisse se faire.

7. Installation d'appareil de mesure selon l'une des revendications 1 à 6, **caractérisée en ce que** l'organe d'isolement (4) est un robinet à boisseau sphérique ou un robinet tournant.

8. Installation d'appareil de mesure selon l'une des revendications 1 à 6, **caractérisée en ce que** l'organe d'isolement est réalisé sous la forme d'organe de commutation (23), de préférence sous la forme de robinet à plusieurs voies, de façon la mieux préférée sous la forme de robinet à 3 voies/2 positions, auquel la au moins une conduite pour appareil d'essai (21) et la au moins une conduite d'actionnement (5) sont couplées.

9. Installation d'appareil de mesure selon l'une des revendications 1 à 8, **caractérisée en ce que** l'appareil de mesure est susceptible d'être couplé, par l'intermédiaire d'au moins une conduite de rinçage additionnelle, à un dispositif de rinçage additionnel, de manière que le dispositif de rinçage additionnel puisse être agencé à distance et loin de l'appareil de mesure, et puisse être télécommandé pour rincer l'appareil de mesure et/ou la au moins une conduite pour appareil d'essai et/ou la au moins une conduite d'actionnement.

10. Installation d'appareil de mesure selon l'une des revendications 1 à 9, **caractérisée en ce que** la conduite pour appareil d'essai (21) est susceptible d'être sollicitée, pour le rinçage de l'appareil de mesure (3) avec un fluide de rinçage, ou, pour l'étalonnage de l'appareil de mesure (3), avec un fluide d'étalonnage.

11. Installation d'appareil de mesure selon la revendication 10, **caractérisée en ce que** la conduite pour appareil d'essai (21) présente, au moins pour le rinçage de l'appareil de mesure (3), une conduite d'amenée (7) servant à amener le fluide de rinçage à l'appareil de mesure (3), ainsi qu'une conduite d'évacuation (8) servant à évacuer le fluide de rinçage de l'appareil de mesure (3).

12. Installation d'appareil de mesure selon la revendication 11, **caractérisée en ce que** la conduite d'évacuation (8), dans le cas d'un étalonnage, forme une deuxième conduite d'amenée pour le fluide d'étalonnage de l'appareil de mesure (3).

13. Installation d'appareil de mesure selon l'une des revendications 1 à 12, **caractérisée en ce que** l'appareil d'essai (16) présente une unité d'augmentation de pression de l'appareil d'essai (20), de préférence, un compresseur.

14. Installation d'appareil de mesure selon l'une des revendications 1 à 13, **caractérisée en ce que** l'appareil d'essai (16) est réalisé sous la forme de dispositif mobile, susceptible d'être transporté et/ou d'être déplacé vers une extrémité libre de la au moins une conduite pour appareil d'essai (21), de préférence susceptible d'être transporté et/ou d'être déplacé vers une extrémité libre de la au moins une conduite pour appareil d'essai (21), de préférence susceptible d'être relié de façon automatisée, la liaison étant réalisée, de préférence, sous la forme de liaison à couplage rapide.

15. Installation d'appareil de mesure selon l'une des revendications 1 à 14, **caractérisée en ce que** l'entraînement de réglage (12) est réalisé sous la forme de dispositif mobile, susceptible d'être transporté et/ou d'être déplacé vers une extrémité libre de la au moins une conduite d'actionnement (5) couplée à l'organe d'isolement (4 ; 23), de préférence susceptible d'être transporté et/ou déplacé de façon automatisée, et susceptible d'être relié à l'extrémité libre de la conduite d'actionnement (5), de préférence, susceptible d'être relié de façon automatisée, la liaison étant réalisée, de préférence, sous la forme de liaison à couplage rapide.

16. Installation d'appareil de mesure selon la revendication 14 et la revendication 15, **caractérisée en ce que** les extrémités libres de la conduite pour appareil d'essai (21) et de la conduite d'actionnement (5) sont disposées au voisinage l'une de l'autre, de manière que l'appareil d'essai (16) et l'entraînement de réglage (12) puissent être agencés sur le même dispositif mobile.

17. Installation d'appareil de mesure selon l'une des revendications 1 à 16, **caractérisée en ce que** l'appareil de mesure (3) est monté en porte-à-faux, à une hauteur non accessible sans disposer de moyens auxiliaires, sur une conduite de processus d'une installation de traitement, et
**en ce que** la au moins une conduite pour appareil d'essai (21) est guidée en partant de l'appareil de mesure (3), ainsi que la au moins une conduite d'actionnement (5) est guidée en partant de l'organe d'isolement (4 ; 23), ainsi que, le cas échéant, au moins une conduite de rinçage additionnelle est guidée en partant de l'appareil de mesure (3), avec une extrémité libre orientée vers le bas, de préférence jusqu'à à peu près la zone de sol (6).

18. Installation d'appareil de mesure selon l'une des revendications 1 à 17, **caractérisée en ce que** les conduites (5, 7, 8) sont réalisées sous la forme de conduites à tuyaux souples et/ou rigides.
